# EUROPEAN PATENT APPLICATION

(11) **EP 4 660 874 A1**
(43) Date of publication of application: **10.12.2025**
(21) Application number: 25174200.3
(22) Date of filing: 05.05.2025
(51) Int. Cl.: G06N 3/006, G06Q 10/04

(54) **SIMULATION PROGRAM, SIMULATION METHOD, AND SIMULATION APPARATUS**

(30) Priority: 06.06.2024 JP 2024092578
(71) Applicant: FUJITSU LIMITED, Kawasaki-shi, Kanagawa 211-8588 (JP)
(72) Inventor: Makihara, Fumiya, 211-8588 Kawasaki-shi, Kanagawa (JP); Segawa, Eigo, 211-8588 Kawasaki-shi, Kanagawa (JP)
(74) Representative: Hoffmann Eitle

(57) **Abstract**

A simulation program causes a computer (10) to execute a process including generating (S101) a digital twin in which a real world is reproduced in a virtual space, specifying (S102. S103), in the generated digital twin, an agent corresponding to a person existing in the real world, and performing (S106) a simulation of an action of the person based on composition information of the specified agent and an action selection model for predicting action selection of the person.

## Description

### FIELD

The embodiments discussed herein are related to a simulation program, a simulation method, and a simulation apparatus.

### BACKGROUND

In recent years, a simulation of a social activity of a person based on a multi-agent simulation has been used to investigate a cause of a social problem and plan a solution measure. In the simulation of a social activity, an agent such as a human agent corresponding to a person in the real world or an environmental agent corresponding to the real world is reproduced in a digital space (for example, a digital twin), and a macro phenomenon of the entire society is generated from local interaction between the human agent and the environmental agent or between the human agents. For example, as a simulation of a social activity reflecting the reality, a traffic simulation for predicting a traffic congestion and for preliminarily verifying effects of a toll road charging measure, and the like is known.

In the above-described simulation of a social activity, action selection by a discrete selection model in which a parameter is trained using a set of an option attribute of selection history data and a selection result is used as a method for selecting an action of an agent such as a human agent.
Patent Literature 1: Japanese Laid-open Patent Publication No. 2009-125312
Patent Literature 2: Japanese Laid-open Patent Publication No. 2018-97726
Patent Literature 3: Japanese Laid-open Patent Publication No. 2021-140489
Patent Literature 4: U.S. Patent No. 2020/0151564

However, in the above-described technology, when individuals and groups are mixed, in a situation in which a selection tendency regarding options of an agent is unable to be correctly expressed, the simulation accuracy decreases.

Accordingly, it is an object in one aspect of an embodiment of the present invention to provide a simulation program, a simulation method, and a simulation apparatus capable of suppressing a decrease in simulation accuracy.

### SUMMARY

According to an aspect of an embodiment, a simulation program causes a computer (10) to execute a process including generating (S101) a digital twin in which a real world is reproduced in a virtual space, specifying (S102. S103), in the generated digital twin, an agent corresponding to a person existing in the real world, and performing (S106) a simulation of an action of the person based on composition information of the specified agent and an action selection model for predicting action selection of the person.

### BRIEF DESCRIPTION OF THE DRAWINGS

FIG. 1 is a diagram for explaining a simulation apparatus according to a first embodiment;
FIG. 2 is a diagram for explaining a discrete selection model;
FIG. 3 is a table for explaining improvement points of the discrete selection model;
FIG. 4 is a flowchart illustrating a flow of a process executed by the simulation apparatus;
FIG. 5 is a functional block diagram illustrating a functional configuration of the simulation apparatus according to the first embodiment;
FIG. 6 is a table for explaining an example of movement record information;
FIG. 7 is a diagram for explaining specifying of an itinerary selection model and members;
FIG. 8 is a diagram for explaining another example of the itinerary selection model;
FIG. 9 is a diagram for explaining moving object information;
FIG. 10 is a table for illustrating itinerary selection model information;
FIG. 11 is a diagram for explaining a simulation;
FIG. 12 is a chart for explaining a display example of a simulation result;
FIG. 13 is a flowchart illustrating a flow of a simulation process by the simulation apparatus according to the first embodiment;
FIG. 14 is a flowchart illustrating a detailed flow of the simulation process; and
FIG. 15 is a diagram for explaining a hardware configuration example.

### DESCRIPTION OF EMBODIMENTS

Preferred embodiments will be explained with reference to accompanying drawings. Note that the present invention is not limited by the embodiments. The embodiments can be appropriately combined within a range without contradiction.

### (a) First Embodiment

### Overall Configuration

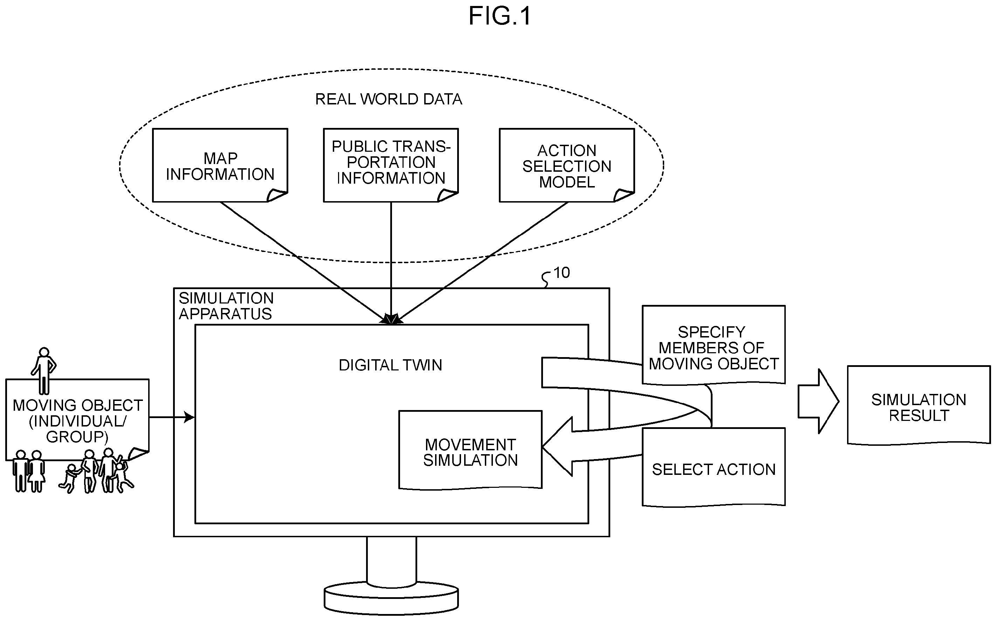

FIG. 1 is a diagram for explaining a simulation apparatus 10 according to a first embodiment. The simulation apparatus 10 illustrated in FIG. 1 is an example of a computer that executes a simulation of a social activity of a person based on a multi-agent simulation in order to investigate a cause of a social problem and plan a solution measure using a digital twin. Specifically, the simulation apparatus 10 simulates a human agent corresponding to a person moving in a city and an infinite number of human agents heading for an exit of a certain facility.

For example, a case of simulating a change in traffic congestion information, a change in moving unit, and the like when a measure is taken for installing a toll road on a road in a certain region will be considered. In this case, the simulation apparatus 10 generates a digital twin in which the real world of a target region is virtually reproduced using map information of the target region and public transportation information that is information on moving units of the target region. Then, the simulation apparatus 10 uses an action selection model to specify an action (for example, a moving unit) performed by a group (an individual, a family, or the like) in the real world. Thereafter, the simulation apparatus 10 executes a simulation regarding a change in action of the group when the measure is taken, or the like, and outputs a simulation result that indicates whether the traffic congestion is resolved.

In general, however, a discrete selection model is used as an action selection model, but when individuals and groups are mixed, there is a case where a selection tendency regarding options of an agent is unable to be correctly expressed, and the simulation accuracy may be decreased.

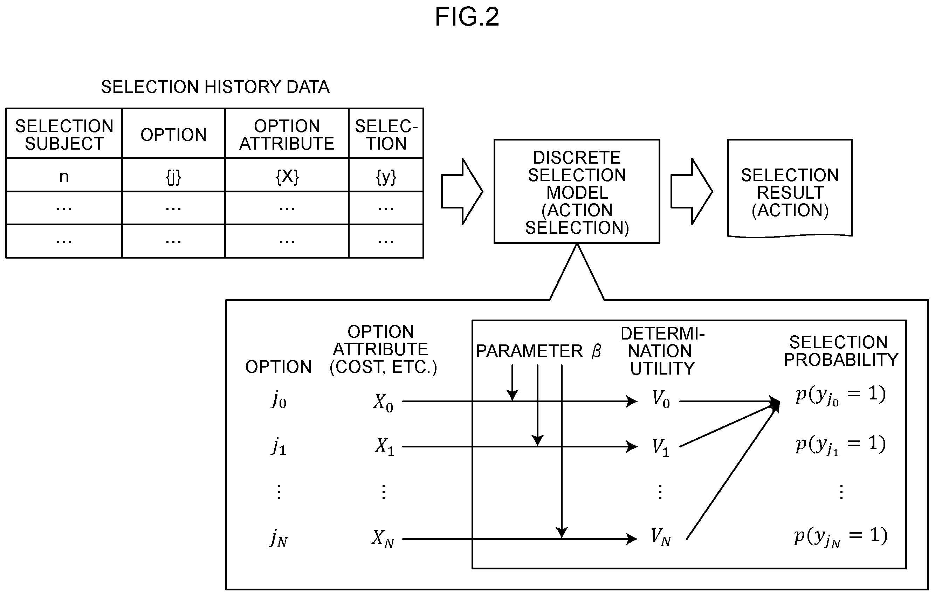

Here, the discrete selection model used for the action selection model will be described. FIG. 2 is a diagram for explaining the discrete selection model. As illustrated in FIG. 2, the discrete selection model is generated from selection history data including a selection subject (n) corresponding to an agent, an option (j) that is an option of an action, an option attribute (X) such as a cost, and selection (y) that is a selected option. Then, for a plurality of discrete options (j₀ to j_{N}), the discrete selection model calculates "utilities of options (V₀ to V_{N})" using, for example, a linear sum of option attributes (Xₒ to X_{N}) and a parameter (**β**) of the model and calculates selection probabilities of the options (p (yⱼ₀ = 1) to p (Y_{jN} = 1)) from relative ratios of the utilities. A simulation using such a discrete selection model is executed by calculating the selection probabilities of the respective options from the discrete selection model for each agent and using an option selected based on the selection probabilities.

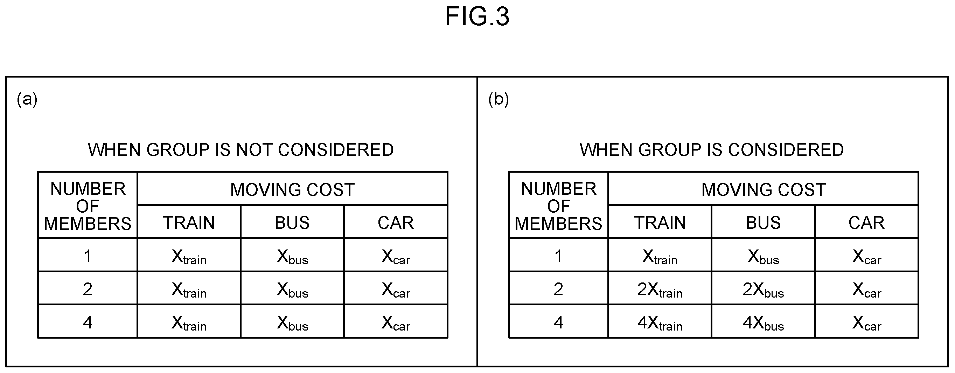

However, as described above, in the discrete selection model, there is a case where a selection tendency is unable to be correctly expressed when individuals and groups are mixed. Improvement points of the discrete selection model will be described using a selection problem of a moving unit of a person in a traffic simulation as an example. FIG. 3 is a table for explaining the improvement points of the discrete selection model.

As illustrated in FIG. 3, the options of the moving unit are {train, bus, car}. When groups are not considered as a moving subject, as illustrated in (a) of FIG. 3, all agents are treated as individuals, and thus the cost for each moving unit {train, bus, car} is {Xₜᵣₐᵢₙ, X_{bus}, X_{car}} even when the number of members is one, two, or four.

However, the moving cost actually varies depending on the number of members of the group, and thus the moving cost of the train and the bus changes depending on the number of members. Specifically, as illustrated in (b) of FIG. 3, regarding the {train, bus, car}, when the number of members is two, the moving cost becomes {2Xₜᵣₐᵢₙ, 2X_{bus}, X_{car}}, and when the number of members is four, the moving cost becomes {4Xₜᵣₐᵢₙ, 4X_{bus}, X_{car}}.

In this manner, when groups are not considered, the moving cost of the car is estimated to be relatively higher than the actual cost, and as a result, there is a possibility that the train or the bus is selected even in a case where moving by car is likely to be selected.

Therefore, the simulation apparatus 10 according to the first embodiment specifies the number of members of the group for each agent serving as the selection subject and inputs an attribute associated with the specified number of members into the action selection model, thereby executing a multi-agent simulation.

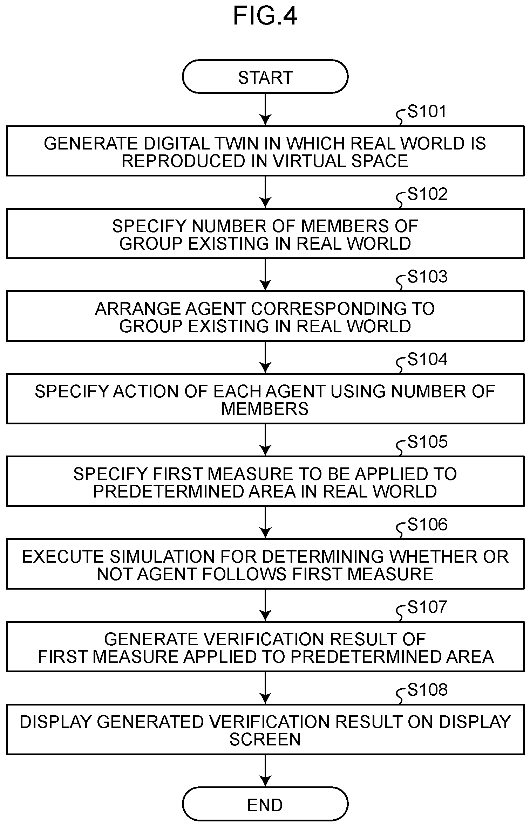

Here, an example of a process in which the simulation apparatus 10 according to the first embodiment performs a simulation using a digital twin will be described. FIG. 4 is a flowchart illustrating a flow of a process executed by the simulation apparatus 10.

As illustrated in FIG. 4, the simulation apparatus 10 generates a digital twin in which the real world is reproduced in a virtual space (S101). Subsequently, the simulation apparatus 10 specifies the number of members of a group existing in the real world (S102) and arranges, in the digital twin, an agent corresponding to the group existing in the real world (S103). Then, the simulation apparatus 10 specifies an action of each agent using the number of members (S104), and specifies a first measure to be applied to a predetermined area in the real world (S105). Thereafter, the simulation apparatus 10 executes a simulation for determining whether or not the agent follows the first measure (S106). Then, the simulation apparatus 10 generates a verification result of the first measure applied to the predetermined area (S107) and displays the generated verification result on a display screen (S108).

For example, the simulation apparatus 10 acquires terminal data from a terminal used by a person existing in the predetermined area in the real world by communication and arranges an agent corresponding to the person in the digital twin in which the virtual space and the real world are time-synchronized based on the acquired terminal data. Then, the simulation apparatus 10 associates the arranged agent with selection history data indicating the moving unit selected by the agent in the real world. The simulation apparatus 10 specifies the number of members (attribute) of each agent arranged in the digital twin using a method or the like described later. In this manner, the simulation apparatus 10 associates the arranged agent, the selection history data, and the number of members (attribute) with each other.

In addition, the simulation apparatus 10 receives, by communication, the first measure to be applied to the predetermined area in the real world from a terminal of the administrator of the measure. Then, the simulation apparatus 10 inputs the attribute of the agent existing in the digital twin into the action selection model to determine a change in action (moving unit) of each of a plurality of the agents for the measure (setting of a toll road). For example, the simulation apparatus 10 specifies a change in action of an agent corresponding to a first person from a car to walking before and after the measure, specifies a change in action of an agent corresponding to a second person from a car to a bicycle before and after the measure, and specifies a change in action of an agent corresponding to a third person from a car to a bus before and after the measure.

As a result, the simulation apparatus 10 can generate and output a measure effect such as reduction in traffic volume and reduction in carbon dioxide emission that can be expected from the measure.

### Functional Configuration

Next, a functional configuration of the simulation apparatus 10 will be described. Here, as an example, a traffic simulation of a city will be described as a simulation, and as an example of the action selection model, an itinerary selection model for selecting an itinerary of a group will be described.

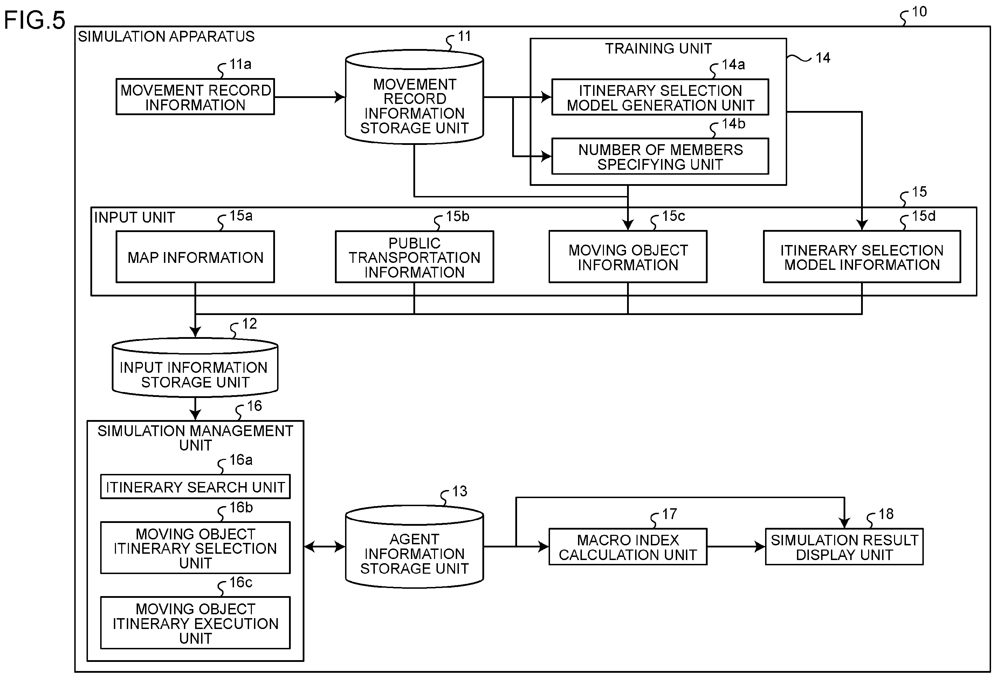

FIG. 5 is a functional block diagram illustrating the functional configuration of the simulation apparatus 10 according to the first embodiment. As illustrated in FIG. 5, the simulation apparatus 10 includes a movement record information storage unit 11, an input information storage unit 12, an agent information storage unit 13, a training unit 14, an input unit 15, a simulation management unit 16, a macro index calculation unit 17, and a simulation result display unit 18.

Note that each storage unit can also be realized by, for example, a memory or a hard disk. In addition, each processing unit is realized by a processor such as a control unit and is realized by, for example, an electronic circuit included in the processor or a process executed by the processor. In addition to the illustrated processing units, another processing unit such as a display unit, that is, a display, a touch panel, or the like may be included.

### Description of Each Storage Unit

The movement record information storage unit 11 reads and stores movement record information 11a for each group in the real world. In addition, the movement record information storage unit 11 outputs the movement record information 11a to the training unit 14 as training data and outputs moving object information including a departure place and a destination in the movement record information 11a to the input unit 15.

The movement record information 11a stored here is a data set of a set of an option attribute such as a fare, a cost, and a moving time of the moving unit and a selected moving unit. However, the option attribute may be a value for one person, and the number of members, the breakdown of the members, and an individual attribute may be included in some records.

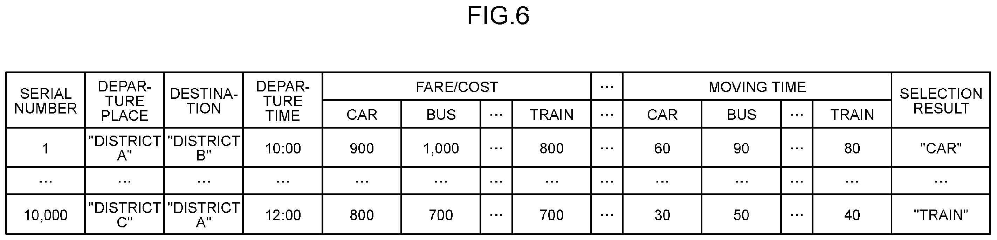

FIG. 6 is a table for explaining an example of the movement record information 11a. As illustrated in FIG. 6, the movement record information 11a includes "serial number, departure place, destination, departure time, fare cost (car, bus,...train), moving time (car, bus,...train), selection result" and the like. Here, the "serial number" is an identifier for identifying a record, that is, a group or a selection subject. The "departure place" indicates a region from which the group departs at the time of executing an itinerary, and the "destination" indicates a region indicating a destination of the group's itinerary. The "fare/cost " is information obtained by comprehensively determining a fare (yen) for the movement and a cost in consideration of a possibility of being caught in a traffic congestion, a risk of an accident, or the like and is set for each moving unit such as a car, a bus, a train, or an airplane. The "moving time" is information on the time to be spent for the movement and is set for each moving unit such as a car, a bus, a train, or an airplane. The "selection result" is a moving unit selected by the group in the action of the itinerary. Note that the "fare/cost" and the "moving time" are option attributes that affect the selection of the moving unit and correspond to β in FIG. 2.

In the example of FIG. 6, an itinerary in which the group with the serial number "1" departs from a departure place (district A) at "10:00" and heads for a destination (district B) is illustrated, and it is illustrated that the "car" is selected as a moving unit under the conditions that the fare/cost is "car: 900, bus: 1000..." and the moving time (minute) is "car: 60, bus: 90...".

The input information storage unit 12 holds input information to be used for a simulation using a digital twin, the input information being input by the input unit 15 described later. Specifically, the input information storage unit 12 reads map information 15a, public transportation information 15b, moving object information 15c, and itinerary selection model information 15d as the input information and stores the information in a temporary storage. In addition, the input information storage unit 12 delivers the input information to the simulation management unit 16. Note that details of the input information will be described later.

The agent information storage unit 13 holds a simulation result by the simulation management unit 16 described later. Specifically, the agent information storage unit 13 receives a simulation result for each unit time from the simulation management unit 16 described later and stores the simulation result in a temporary storage.
In addition, the agent information storage unit 13 delivers the simulation result to the macro index calculation unit 17 described later and outputs data requested by the simulation management unit 16.

### Description of Training Unit 14

The training unit 14 is a processing unit that includes an itinerary selection model generation unit 14a and a number of members specifying unit 14b and executes training of an itinerary selection model for predicting an itinerary to be selected by the group. Note that since the training unit 14 can also execute training of the itinerary selection model and estimation of the number of members by one training algorithm, the itinerary selection model generation unit 14a and the number of members specifying unit 14b do not necessarily need to be independent.

The itinerary selection model generation unit 14a simultaneously trains (trains) parameters of a plurality of action selection models corresponding to different numbers of members and the numbers of members by machine training, the machine training using a latent variable that is the number of members of each of a plurality of groups, by using selection history data that is a selection history of an action selected by each of the plurality of groups in the real world. In addition, the itinerary selection model generation unit 14a stores definitions and parameters of the trained itinerary selection models as the itinerary selection model information 15d.

Specifically, the itinerary selection model generation unit 14a assumes 1 to K latent classes each corresponding to a latent variable while the number of members is set as the latent variable between integer values of 1 to K. In addition, the itinerary selection model generation unit 14a assumes a probability distribution for generating the latent variable. In addition, for example, a multinomial logit model is assumed as the itinerary selection model for each latent class. In such a state, the itinerary selection model generation unit 14a trains a parameter of a corresponding one of the itinerary selection models and a parameter of the distribution for generating the latent variable so that a selection result of a movement record and an expected value of a likelihood for the latent variable become the highest, using a value obtained by multiplying, by the number of members, a value (option attribute), such as the fare and the cost among the option attributes, that varies depending on the number of members. That is, the itinerary selection model generation unit 14a trains the itinerary selection model by supervised training in which "selection subject, option, option attribute" are explanatory variables, and "selection" is an objective variable.

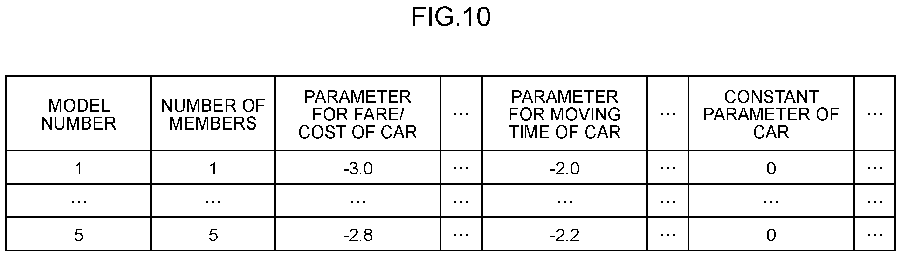

For each of a plurality of agents corresponding to the plurality of groups, the number of members specifying unit 14b predicts the number of members based on an output result obtained by inputting the selection history of a corresponding one of the plurality of agents into each of the plurality of itinerary selection models that is trained. Then, the number of members specifying unit 14b specifies the number of members with the highest probability and gives the number of members to the moving object information. Note that similarly to the action selection model, in each itinerary selection model, a linear sum is calculated by multiplying, for example, an option attribute (for example, fare/cost, moving time, or the like) by a parameter (for example, FIG. 10) of a model in consideration of the number of members for a plurality of discrete options (for example, moving unit). Then, in each itinerary selection model, "utilities of the option (V₀ to V_{N})" are calculated using the linear sum, selection probabilities of the option (p (Yⱼ₀ = 1) to p (Y_{jN} = 1)) are calculated from relative ratios of the utilities, and an option is selected using the result of the calculations.

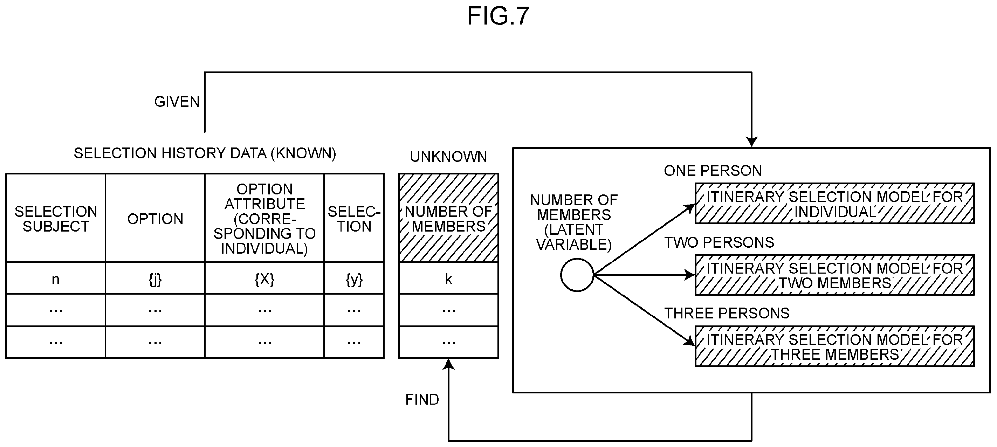

Here, a method for specifying the members will be described. FIG. 7 is a diagram for explaining specifying of the itinerary selection model and the members. As illustrated in FIG. 7, the itinerary selection model generation unit 14a trains the itinerary selection model of an individual using known selection history data (selection subject (n), option (j), option attribute (X), selection (y)) and the latent variable (one person). Similarly, the itinerary selection model generation unit 14a trains the itinerary selection model of two members using known selection history data and the latent variable (two persons) and trains the itinerary selection model of three members using known selection history data and the latent variable (three persons).

When the training is ended, the number of members specifying unit 14b inputs the record of the selection subject (n) of the selection history data to each itinerary selection model to acquire an output result and specifies an itinerary selection model having the highest selection probability. Here, in a case where the selection result of the itinerary selection model of the two members has the highest selection probability, the number of members specifying unit 14b specifies the number of members (k) of the selection subject (n) of the selection history data as (2) and adds the number of members to the record. In this manner, the itinerary selection model generation unit 14a estimates the number of members for each selection subject to be an agent in the digital twin.

Note that the latent variable (the number of members) is not limited to one, two, three, or the like. For example, an action selection model corresponding to each of a plurality of classes corresponding to a family structure, which is a typical pattern of members of a group, can also be used.

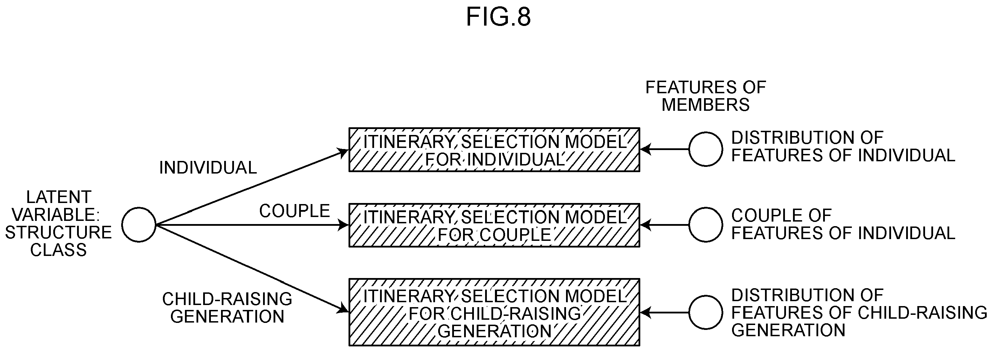

FIG. 8 is a diagram for explaining another example of the itinerary selection model. As illustrated in FIG. 8, it is also possible to use, as the latent variable, an attribute, such as an individual, a couple, and a child-raising generation, that affects the moving unit and the itinerary. In this case, similarly, the itinerary selection model generation unit 14a trains a parameter of the itinerary selection model and a parameter of the distribution for generating the latent variable so that a selection result of a movement record and an expected value of a likelihood for the latent variable become the highest, using a value obtained by multiplying, by the number of people specified by the attribute, a value, such as the fare and the cost among the option attributes, that varies depending on the attribute. Therefore, the itinerary selection model generation unit 14a estimates an individual, a couple, and a child-raising generation, instead of the number of members, for the selection subject. Note that FIGS. 7 and 8 illustrate three itinerary selection models, but the number is not limited thereto, and for example, the itinerary selection model for the latent variable (four persons) or the like can also be trained and used.

### Description of Input Unit 15

The input unit 15 is a processing unit that stores, in the input information storage unit 12, various types of information used in the digital twin. Specifically, the input unit 15 stores the map information 15a and the public transportation information 15b acquired from various servers in the real world, the moving object information 15c acquired from the movement record information storage unit 11 and the training unit 14, and the itinerary selection model information 15d acquired from the training unit 14 in the input information storage unit 12.

Here, the map information 15a is data that holds roads, route maps, and the like, and for example, open street map (OSM) data or the like can be adopted. The public transportation information 15b is data that holds an operation time, a fare, a stop point, and the like for each route, and for example, general transit feed specification (GTFS) data or the like can be adopted.

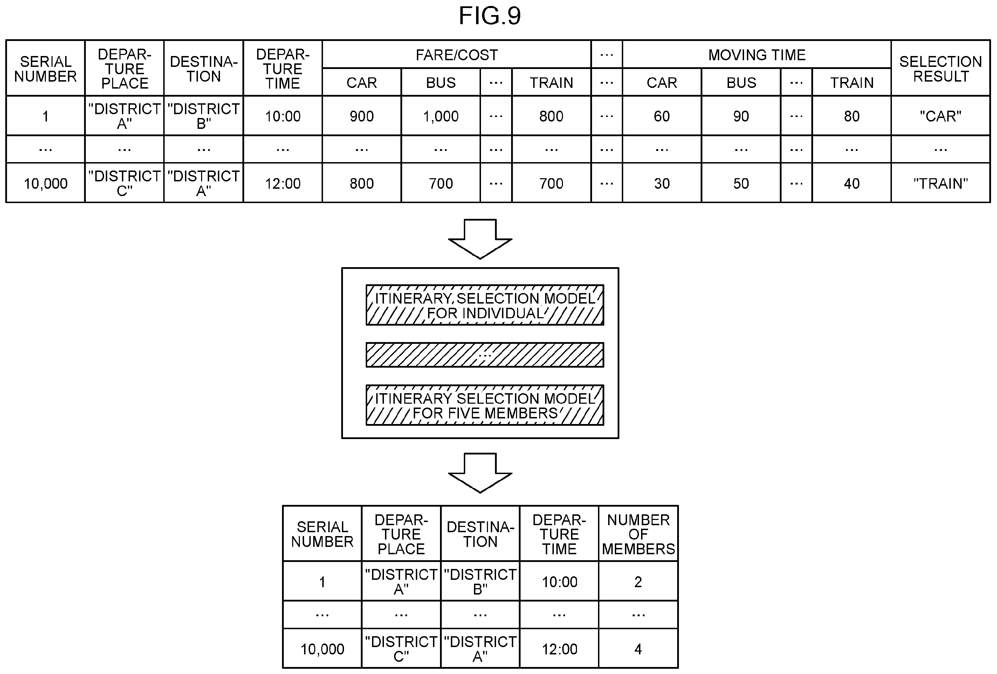

The moving object information 15c is information that holds information on agents generated in a simulation of a group (moving object) and particularly includes the number of members, and may include a breakdown of the members and an individual attribute. FIG. 9 is a diagram for explaining the moving object information 15c. As illustrated in FIG. 9, the training unit 14 inputs movement record information of each selection subject (serial number in FIG. 9) into each itinerary selection model generated by using the movement record information illustrated in FIG. 6, and the number of members of each selection subject is estimated. Then, the input unit 15 extracts "serial number, departure place, destination, departure time, number of members" from the movement record information and the number of members so as to generate the moving object information 15c. Note that the input unit 15 can also set, as the moving object information 15c, information obtained by adding the number of members to the movement record information.

The itinerary selection model information 15d is information that holds a definition of each trained itinerary selection model and values of a parameter. FIG. 10 is a table for illustrating the itinerary selection model information 15d. As illustrated in FIG. 10, the itinerary selection model information 15d includes "model number, number of members, and various parameters". Here, the "model number" is information for identifying an itinerary selection model. The "number of members" is the number of members targeted by the itinerary selection model and corresponds to a trained latent variable. The "various parameters" are parameters (**β**) for changing option attributes that affect selection of an itinerary (moving unit) and are set for each option attribute described in FIG. 6, for example. In the example of FIG. 10, "-3.0 " is set as a "parameter for the fare/cost of the car" for the itinerary selection model for the number of members (one person) of the model number (1). This indicates that at the time of an itinerary selection simulation, the simulation is performed by multiplying "900" set to the "car" of the "fare/cost" in FIG. 6 by "-3.0".

### Description of Simulation Management Unit 16

The simulation management unit 16 is a processing unit that includes an itinerary search unit 16a, a moving object itinerary selection unit 16b, and a moving object itinerary execution unit 16c and executes a simulation using a digital twin.

Specifically, the simulation management unit 16 manages an execution status up to itinerary search, moving object itinerary selection, and moving object itinerary execution in an execution flow of a simulation for each unit time and sequentially transmits execution commands. Then, the simulation management unit 16 stores a simulation result for each unit time in the agent information storage unit 13.

The itinerary search unit 16a, the moving object itinerary selection unit 16b, and the moving object itinerary execution unit 16c generate various types of information to be the elements of a simulation. For example, the itinerary search unit 16a calculates an itinerary, a time, a fare, and a cost of the itinerary for each agent based on the departure place, the destination, the departure time, and a plurality of transportation units by using, for example, an open trip planner (OTP). At this time, the itinerary search unit 16a calculates the cost based on the estimated number of members. Specifically, for the searched itinerary, the itinerary search unit 16a multiplies the above-described "fare/cost" by the estimated number of members to calculate the cost corresponding to the number of members.

For the itinerary obtained by the itinerary search unit 16a for each agent, the moving object itinerary selection unit 16b determines the itinerary selected by each agent, which is the moving object in the simulation, using the number of members of the moving object (the serial number in FIG. 9) and the itinerary selection model. For example, the moving object itinerary selection unit 16b determines an itinerary whose cost is the lowest among the searched itineraries. In addition, the moving object itinerary selection unit 16b calculates an element used to determine the moving unit of each agent. For example, for each agent, the moving object itinerary selection unit 16b specifies, from the itinerary selection model information 15d, a parameter for each of the estimated numbers of members and calculates a value obtained by multiplying an option attribute by the parameter for the number of members.

The moving object itinerary execution unit 16c executes the itinerary selected for each agent in the same simulator. For example, when executing the itinerary of each agent determined by the moving object itinerary selection unit 16b using a known multi-agent traffic simulator, the moving object itinerary execution unit 16c simulates a change in the moving unit or the like by an option attribute in consideration of the number of members calculated for each agent.

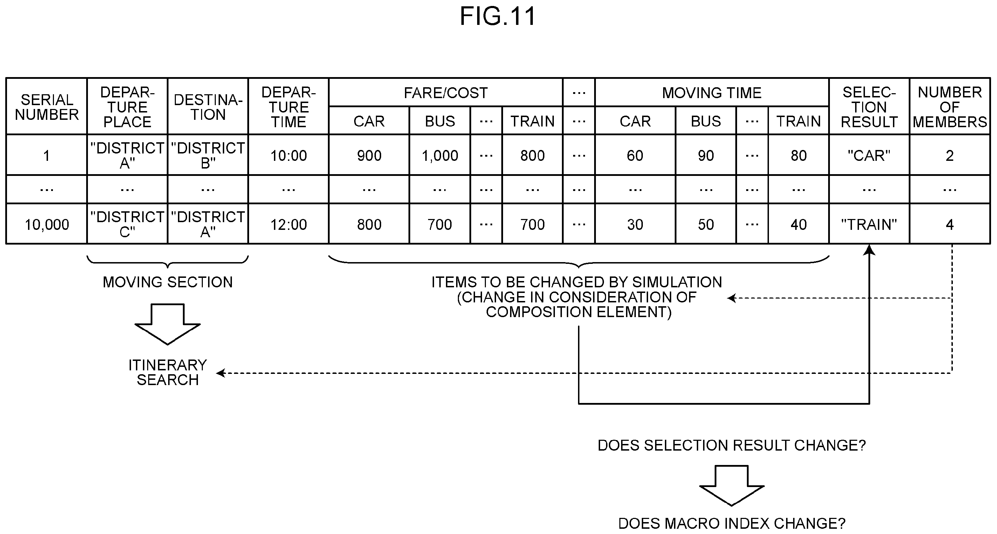

Here, a simulation will be specifically described with reference to FIG. 11. FIG. 11 is a diagram for explaining a simulation. In FIG. 11, moving object information "serial number, departure place, destination, departure time, fare/cost,...moving time, selection result, number of members" in which the estimated number of members is added to the movement record information of FIG. 6 will be described as an example.

First, itinerary search and the like will be described using a record of "serial number = 1" which is information on a moving object (group) as an example. The simulation management unit 16 specifies a section from a destination (district B) from a departure place (district A) of the serial number =1 as a moving section and specifies the number of members "two". In addition, the simulation management unit 16 specifies a parameter of the itinerary selection model information 15d corresponding to the number of members "two" and updates the option attributes (fare/cost and the like) of FIG. 11 using the specified parameter. Then, the simulation management unit 16 specifies an "itinerary" when two people move in the moving section (district A to district B) using the OTP or the like on the condition of the updated option attributes.

In this manner, the simulation management unit 16 specifies the "itinerary" after updating the option attributes according to the number of members for each moving object (serial number) illustrated in FIG. 11.

Next, execution of the simulation will be described. For example, the simulation management unit 16 specifies the serial numbers 1 to 20 as moving objects (serial numbers) of which the departure time corresponds to a unit time (for example, 10:00 to 10:10), and specifies "itineraries (including moving units)" of the moving objects. Then, the simulation management unit 16 arranges agents with the serial numbers 1 to 20 in a digital twin. Thereafter, the simulation management unit 16 performs a simulation using the same traffic simulator for each of the serial numbers 1 to 20 based on the calculated option attributes and executes the itineraries using the selection results (moving units) obtained by the simulation.

Subsequently, the simulation management unit 16 executes a simulation for the next unit time (10:10 to 10:20) in the same manner. In this manner, the simulation management unit 16 executes the itineraries of the agents with the moving units (selection results) selected in consideration of the option attributes for each unit time (for example, every 10 minutes). Note that each moving unit can be selected by a traffic simulation, and other machine training models, physical models, statistical data, and the like that output the moving unit according to an input of the option attributes and the number of members can also be adopted.

As a result, the simulation management unit 16 can specify which moving unit is selected by each agent for movement in consideration of the option attributes such as the cost. For example, although the movement record indicates "car", the moving unit may be replaced with "train" depending on the option attributes such as the cost and moving time, the number of groups moving in the same time zone, and the like. This is because, although changing to the train increases the fare and the cost, it is simulated that the train can move without being affected by a traffic congestion and is more advantageous.

In addition, the simulation management unit 16 can also perform a simulation under the condition that a measure of setting a toll road in a part of a road in the target region is taken. For example, the simulation management unit 16 simulates selection of the moving unit of each agent according to the measure using the information of the measure as an input of the above-described traffic simulation or machine training model. As a result, when the selection of the moving unit "car" is decreased, the simulation management unit 16 can specify the measure as a "measure leading to alleviation of a traffic congestion".

### Description of Macro Index Calculation Unit 17

The macro index calculation unit 17 is a processing unit that calculates a macro index related to the movement of a person based on a simulation result included in the agent information storage unit 13. For example, the macro index calculation unit 17 can also calculate a macro index obtained from the movement record and a macro index at the time of simulation. The macro index calculated by the macro index calculation unit 17 depends on the analysis purpose of the simulation and is, for example, the total emission amount of carbon dioxide, the average moving time, the total number or ratio of each moving unit, or the like. Note that as a calculation method, various widely used calculation methods can be adopted, and for example, the total emission of carbon dioxide is calculated by "activity amount (production amount, use amount, incineration amount, or the like) × emission factor".

### Description of Simulation Result Display Unit 18

The simulation result display unit 18 inputs and displays the simulation result included in the agent information storage unit 13 and the macro index calculated by the macro index calculation unit 17 into and on a display unit and transmits the simulation result and the macro index to a designated device such as a user terminal. The simulation result display unit 18 can also arrange and display the macro index obtained from the movement record and the macro index at the time of simulation in a comparable manner.

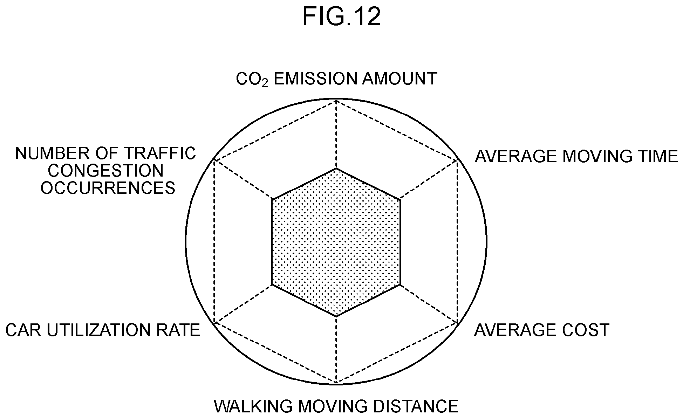

For example, the simulation result display unit 18 displays a calculated macro index, a movement trajectory of the moving object on a map, and the like as a simulation result. FIG. 12 is a chart for explaining a display example of the simulation result. As illustrated in FIG. 12, the simulation result display unit 18 displays macro indexes such as the emission amount of carbon dioxide, the number of traffic congestion occurrences, the car utilization rate, the walking moving distance, the average cost, and the average moving time in a graph such as a radar chart. In addition, the simulation result display unit 18 can also generate and display a graph for each measure, unit time, and itinerary. Note that the display format is not limited to a radar chart.

### Overall Process Flow

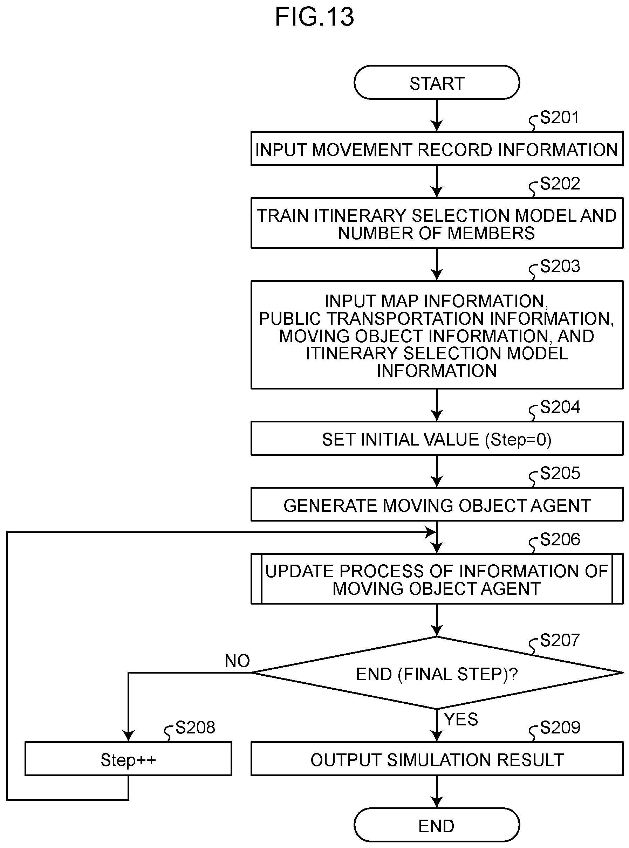

Next, a flow of each process in the above-described simulation process will be described. FIG. 13 is a flowchart illustrating a flow of the simulation process by the simulation apparatus 10 according to the first embodiment.

As illustrated in FIG. 13, the simulation apparatus 10 executes input of the movement record information (S201) and executes training of the itinerary selection model and the number of members (S202). When the training is ended, the simulation apparatus 10 executes input of the map information 15a, the public transportation information 15b, the moving object information 15c, and the itinerary selection model information 15d (S203) and sets an initial value (Step = 0) which is a time step (S204).

Thereafter, the simulation apparatus 10 generates a moving object agent, which is an agent corresponding to the moving object, arranges the moving object agent in the digital twin (S205), and executes an update process of the information of the moving object agent (S206). For example, the simulation apparatus 10 searches for an itinerary, selects an itinerary, and executes the itinerary in a simulation.

When the update process is ended, the simulation apparatus 10 determines whether or not the final step has been reached (S207), and in a case where the final step has not been reached (S207: No), the step is increased (S208), and S206 and the subsequent steps are repeated. For example, when the simulation execution time is within a set time, the simulation apparatus 10 repeats the process. On the other hand, when the final step has been reached (S207: Yes), the simulation apparatus 10 outputs a simulation result (S209).

### Detailed Process Flow

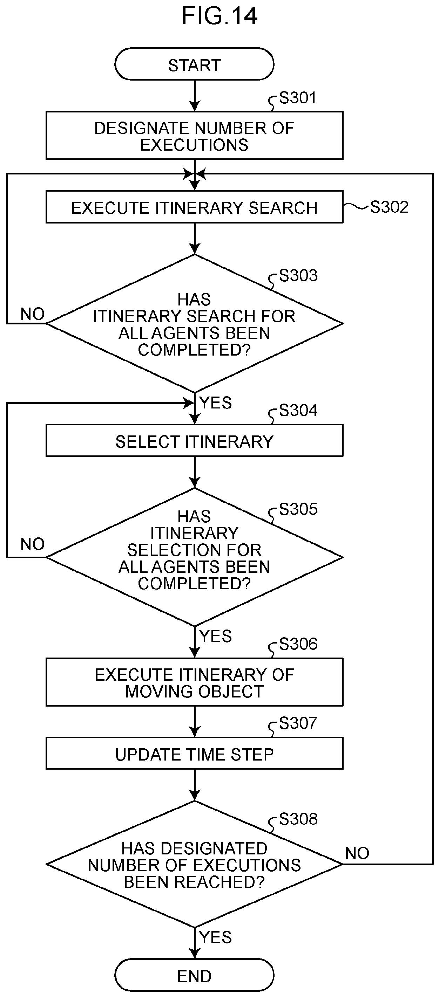

FIG. 14 is a flowchart illustrating a detailed flow of the simulation process. As illustrated in FIG. 14, the simulation apparatus 10 designates the number of executions by user setting or the like (S301) and executes the itinerary search (S302).

Then, the simulation apparatus 10 repeats S302 and the subsequent steps until the itinerary search for all the agents is completed (S303: No), and when the itinerary search for all the agents is completed (S303: Yes), selection of an itinerary is executed for each agent (S304).

Here, the simulation apparatus 10 executes S304 until the selection of an itinerary is completed for each agent (S305: No), and when the selection of an itinerary is completed for each agent (S305: Yes), the simulation apparatus 10 executes the itinerary of a moving object which is the agent (S306).

Thereafter, the simulation apparatus 10 updates the time step (S307) and determines whether or not the designated number of executions has been reached (S308). Then, in a case where the designated number of executions has not been reached (S308: No), the simulation apparatus 10 repeats S302 and the subsequent steps, and in a case where the designated number of executions has been reached (S308: Yes), the process ends.

### Effects

As described above, since the simulation apparatus 10 can estimate the number of members for a group in the real space and perform a simulation using the agent including the number of members, it is possible to suppress a decrease in simulation accuracy.

In addition, since the simulation apparatus 10 can execute a simulation of the moving unit, the itinerary, or the like after calculating the option attributes corresponding to the estimated number of members, it is possible to correctly express the selection tendency regarding the options of the agent and to improve the simulation accuracy.

In introducing measures that are not allowed to fail, such as social measures, into the real world, preliminary verification of the measures is preferably performed. At this time, the simulation apparatus 10 can improve the accuracy of the measure verification. In addition, the simulation apparatus 10 can reduce a load of computer processing by using a simulation using an action selection model when performing a simulation.

Moreover, the simulation apparatus 10 can specify alleviation of a traffic congestion and the like as the situation of an area to which a measure is applied based on the result of a simulation of an action of a person and generate a result of the measure, so that the effects of various measures can be generated.

In addition, the simulation apparatus 10 can generate a plurality of action selection models, in which the number of members is a latent variable, by using the movement record information in the real space and can estimate the number of members of each agent by using the plurality of action selection models. As a result, the simulation apparatus 10 can execute a highly accurate simulation in consideration of the real world.

### (b) Second Embodiment

Although the embodiment of the present invention has been described so far, the present invention may be implemented in various different forms other than the above-described embodiment.

### Numerical Values, etc.

The attribute names, models, numerical values, graphs, and the like used in the above-described embodiment are merely examples and can be appropriately changed. In addition, the flow of the process described in each flowchart can be appropriately changed within a range without contradiction.

### Simulation

In the above-described embodiment, an example in which the simulation apparatus 10 executes a traffic simulation regarding road traffic such as a car, a bus, and a taxi has been described, but the present invention is not limited thereto. For example, the simulation apparatus 10 can also execute a simulation regarding movement of a person. Note that, for each simulation, various commonly used calculation formulas and simulation methods can be adopted.

### Measure

For example, the simulation apparatus 10 can specify the situation of an area to which a measure is applied based on the result of the simulation of the action of the person described above and also display information on the prediction result of the measure based on the situation of the specified area. For example, the simulation apparatus 10 can obtain a change in the moving unit of each group by the above-described simulation. Therefore, for example, in a case where "bus" increases as the moving unit, the simulation apparatus 10 executes a measure of "increasing the number of buses" and thus outputs that "improvement of the flow of people can be predicted". Similarly, for example, in a case where "car" increase as the moving unit, the simulation apparatus 10 executes a measure of "installing a temporary toll road" and outputs that "alleviation of traffic congestion can be predicted" accordingly.

### System

The process procedures, control procedures, specific names, and information including various data and parameters illustrated in the above-described document and drawings may be appropriately changed unless otherwise specified.

In addition, specific forms of distribution and integration of the constituent elements of each device are not limited to those illustrated in the drawings. For example, the itinerary selection model generation unit 14a and the number of members specifying unit 14b may be integrated. That is, all or some of the constituent elements may be functionally or physically distributed or integrated in an appropriate unit according to various loads, usage conditions, and the like. Moreover, all or an appropriate part of each processing function of each device can be realized by a CPU and a program analyzed and executed by the CPU or can be realized as hardware by a wired logic.

Moreover, all or an appropriate part of each processing function performed in each device can be realized by a CPU and a program analyzed and executed by the CPU or can be realized as hardware by a wired logic.

### Hardware

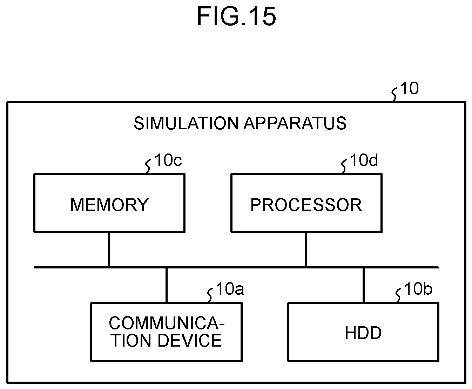

FIG. 15 is a diagram for explaining a hardware configuration example. As illustrated in FIG. 15, the simulation apparatus 10 includes a communication device 10a, a hard disk drive (HDD) 10b, a memory 10c, and a processor 10d. In addition, the units illustrated in FIG. 15 are connected to each other by a bus or the like.

The communication device 10a is a network interface card or the like and communicates with other devices. The HDD 10b stores programs and DBs for operating the functions illustrated in FIG. 5.

The processor 10d reads a program for executing a process similar to those of the processing units illustrated in FIG. 5 from the HDD 10b or the like and develops the program in the memory 10c, thereby operating a process for executing the functions described with reference to FIG. 5 and the like. For example, this process executes a function similar to that of each processing unit included in the simulation apparatus 10. Specifically, the processor 10d reads a program having functions similar to those of the training unit 14, the input unit 15, the simulation management unit 16, the macro index calculation unit 17, the simulation result display unit 18, and the like from the HDD 10b or the like. Then, the processor 10d executes a process of executing processes similar to those of the training unit 14, the input unit 15, the simulation management unit 16, the macro index calculation unit 17, the simulation result display unit 18, and the like.

In this manner, the simulation apparatus 10 operates as an information processing device that executes a simulation method by reading and executing a program. In addition, the simulation apparatus 10 can also implement functions similar to those of the above-described embodiments by reading the above-described program from a recording medium by a medium reading device and executing the read program. Note that the program referred to in other embodiments is not limited to being executed by the simulation apparatus 10. For example, the above-described embodiments may be applied in the same manner to a case where another computer or server executes the program or a case where the computer and the server execute the program in cooperation.

The program may be distributed via a network such as the Internet. In addition, the program may be recorded in a computer-readable recording medium such as a hard disk, a flexible disk (FD), a CD-ROM, a magneto-optical disk (MO), or a digital versatile disc (DVD) and may be executed by being read from the recording medium by a computer.

According to one embodiment, it is possible to suppress a decrease in simulation accuracy.

## Claims

1. A simulation program that causes a computer (10) to execute a process comprising:
generating (S101) a digital twin in which a real world is reproduced in a virtual space;
specifying (S102. S103), in the generated digital twin, an agent corresponding to a person existing in the real world; and
performing (S106) a simulation of an action of the person based on composition information of the specified agent and an action selection model for predicting action selection of the person.

2. The simulation program according to claim **1,** wherein the specifying (S102. S103) includes
specifying an agent for each of a plurality of groups corresponding to the real world, and
the performing (S106) includes
selecting an action using the action selection model for each of a plurality of the agents corresponding to the plurality of groups, and
executing the simulation using composition information of each of the plurality of agents and an action selected for each of the plurality of agents.

3. The simulation program according to claim 2, wherein the performing (S106) includes
specifying a number of members for each of the plurality of groups, and
selecting the action using the specified number of members and the action selection model for each of the plurality of agents.

4. The simulation program according to claim 2, wherein the process further includes:
simultaneously training (S202) parameters of a plurality of action selection models corresponding to different numbers of members and the numbers of members by machine training, the machine training using a latent variable that is a number of members of each of the plurality of groups, by using selection history data that is a selection history of an action selected by each of the plurality of groups in the real world, wherein
the performing (S106) includes
predicting (S205), for each of a plurality of agents corresponding to the plurality of groups, the number of members based on an output result obtained by inputting the selection history of the action of a corresponding one of the plurality of agents into each of the plurality of action selection models that is trained, and
simulating (S206) a change in action selected by each of the plurality of agents, when an option attribute for selecting the action is changed, using the selection history of the action and the number of members in each of the plurality of agents.

5. The simulation program according to claim 4, wherein
each of the plurality of action selection models is an action selection model corresponding to each of a plurality of classes corresponding to a family structure that is a typical pattern of members of each of the groups.

6. The simulation program according to claim 4, wherein the process further includes:
calculating (S107) a macro index related to movement of the person using a result of a simulation of a change in action selected by each of the plurality of agents; and
displaying (S108) the calculated macro index.

7. The simulation program according to claim 6, wherein the calculating (S107) includes
calculating a first macro index from a movement record of a person existing in the real world,
calculating a second macro index from a simulation result in which the person is an agent, and
displaying the first macro index and the second macro index in a comparable manner.

8. The simulation program according to claim 1, wherein the process further includes:
specifying (S105) a situation of an area to which a measure is applied based on a result of a simulation of an action of the person; and
displaying (S107, S108) information on a prediction result of the measure on a display device based on the specified situation of the area.

9. The simulation program according to claim 4, wherein the simulating (S206) includes
executing a measure in an area to which the plurality of groups belongs, and
in a state where the measure is executed, simulating a change in action selected by each of the plurality of agents when an option attribute for selecting the action is changed, using a selection history of the action and the number of members in each of the plurality of agents, and
displaying the measure and a result of the simulating in association with each other.

10. A simulation method carried out by a computer (10), comprising:
generating a digital twin in which a real world is reproduced in a virtual space;
specifying, in the generated digital twin, an agent corresponding to a person existing in the real world; and
performing a simulation of an action of the person based on composition information of the specified agent and an action selection model for predicting action selection of the person.

11. A simulation apparatus (10) comprising:
a control unit (16) configured to
generate a digital twin in which a real world is reproduced in a virtual space,
specify, in the generated digital twin, an agent corresponding to a person existing in the real world, and
perform a simulation of an action of the person based on composition information of the specified agent and an action selection model for predicting action selection of the person.
